# EUROPEAN PATENT APPLICATION

(11) **EP 4 386 695 A1**
(43) Date of publication of application: **19.06.2024**
(21) Application number: 23195716.8
(22) Date of filing: 06.09.2023
(51) Int. Cl.: G06V 20/56, G06V 20/58, G08G 1/16, G08G 1/00, G07C 5/08

(54) **ELECTRONIC DEVICE FOR DETECTING VEHICLE DRIVING BEHAVIOR MULTI DIMENSIONALLY AND METHOD THEREOF**

(30) Priority: 15.12.2022 KR 20220175499
(71) Applicant: Citus Co., Ltd., Seoul 08511 (KR)
(72) Inventor: LEE, Q Young, 08096 Seoul (KR); KIM, Jin Hun, Seoul 08511 (KR); KIM, Bo Ae, 07304 Seoul (KR); LEE, Joonpyo, 13907 Anyang-si, Gyeonggi-do (KR)
(74) Representative: M. Zardi & Co S.A.

(57) **Abstract**

According to one embodiment of the present invention, an electronic device is installed on a vehicle to detect vehicle driving behavior in multiple dimensions. The device includes a sensor unit that gathers driving information from the vehicle. It also features a road image analysis unit, which identifies an object area around the vehicle by analyzing images captured by a camera. Using deep learning techniques, the road image analysis unit combines the object area with the driving information to determine potential dangerous situations that may arise during driving. Additionally, the device includes a movement path analyzer that determines these dangerous situations by comparing vehicle location information obtained from a GPS device with GIS map data, utilizing map matching techniques.

## Description

### [TECHNICAL FIELD]

The present invention relates to an electronic device and method for sensing vehicle driving behavior.

### [BACKGROUND ART]

With the expansion of the delivery industry, there has been a significant increase in the number of two-wheeled vehicles. Additionally, the number of registered vehicles in Korea has exceeded approximately 24 million by the end of 2021, primarily due to the rise in single-person households and the adoption of eco-friendly vehicles.

As the number of vehicles on the road continues to grow, traffic congestion and accidents have also become more prevalent. Consequently, it has become crucial for drivers and control systems to have a system that can proactively anticipate traffic jams and detect hazardous situations while driving.

Traditionally, smartphones or Digital Tacho Graph (DTG) devices have been utilized to collect and analyze vehicle movement patterns in order to assess traffic conditions.

However, smartphones or DTG devices have limitations when it comes to accurately detecting actual vehicle driving behavior. These devices struggle to capture the specific characteristics of the road being traveled on and fail to consider the surrounding environment, such as traffic lights or pedestrians.

On the other hand, in order to identify the causes of vehicle traffic accidents, such as failure to comply with safe driving obligations or signal violations, it is crucial to incorporate the characteristics of the roads and the surrounding environment. Therefore, there is a need for technology that can identify various driving behaviors and improve the collection system for vehicle operation data.

### [SUMMARY OF THE INVENTION]

The objective of the present invention is to provide an electronic device and method for multidimensionally sensing vehicle driving behavior.

Another objective of the present invention is to enhance a vehicle driving data collection system by identifying various driving behaviors.

In one embodiment of the present invention, an electronic device is mounted on a vehicle to detect vehicle driving behavior in multiple dimensions. The device includes a sensor unit that gathers driving information of the vehicle, a road image analysis unit that utilizes a camera to identify objects in the vehicle's vicinity from the captured images, and determines dangerous situations during driving by combining the object area and the driving information using deep learning techniques. Additionally, the device comprises a movement path analysis unit that determines the aforementioned dangerous situations by performing map matching between the vehicle's location information obtained from the GPS device and GIS map data.

The electronic device utilizes motion information acquired from either an acceleration sensor or a gyro sensor, in addition to the location information and driving information, to determine whether the vehicle is in motion. It also includes a driving time analysis unit that operates to identify the duration of vehicle operation by setting a timer while the vehicle is in motion.

When the vehicle comes to a stop, the travel time analyzer temporarily halts the timer to calculate the duration of the vehicle's stationary period.

The road image analyzer combines the object area and the motion information of the vehicle, which is obtained from either an acceleration sensor or a gyro sensor among the driving information.

The moving path analysis unit identifies the vehicle's trajectory using the location information, conducts map matching between the trajectory and multiple road links present in the GIS map data, and determines whether the vehicle is traveling on a designated road based on the existence of at least one road link with successful map matching.

If at least one road link has undergone successful map matching, the moving path analysis unit recognizes the vehicle as driving on a designated road and evaluates the driving information by comparing it with the information of the relevant road link(s) to identify any potential dangerous situations.

In cases where there is no road link with successful map matching, the moving path analysis unit concludes that the vehicle is driving off the designated road and further determines whether the vehicle is traversing a prohibited area using the GIS map data and the location information.

The moving path analysis unit can search for polygonal features surrounding the vehicle in the GIS map data and determine whether the vehicle is driving in a prohibited area based on the polygonal feature information and the location information.

In the method for multidimensionally detecting vehicle driving behavior performed by the electronic device, as per an embodiment of the present invention, the following steps are involved: identifying an object area around the vehicle from an image captured by a camera among the driving information, and determining hazardous situations through road image analysis by combining the object area with the driving information using deep learning techniques; determining hazardous situations through movement path analysis based on the presence or absence of map matching between the vehicle's location information obtained from a GPS device and the GIS map data among the driving information.

The method may include determining whether the vehicle is in motion using the motion information obtained from either an acceleration sensor or a gyro sensor among the location information and driving information. Additionally, the method may involve determining the duration of vehicle operation by activating a timer while the vehicle is in motion.

The process of determining the driving time of the vehicle may include temporarily pausing the timer when the vehicle comes to a stop.

To determine hazardous situations through road image analysis, the method may incorporate the combination of the object area with the motion information of the vehicle, which is obtained from either an acceleration sensor or a gyro sensor among the driving information.

The step of determining the dangerous situation, according to the movement path analysis mentioned above, may involve the following:
Identifying the vehicle's movement path using the provided location information.

Performing map matching between the identified movement path and multiple road links included in the GIS map data.

To identify whether the vehicle is driving on the designated road, the method involves recognizing that the vehicle is on the designated road when at least one road link has undergone successful map matching. Additionally, the method includes determining dangerous situations by comparing the information of the relevant road link(s) with the driving information.

To identify whether the vehicle is driving on a non-designated road, the method entails determining that the vehicle is driving off the designated road when there is no road link with successful map matching. Furthermore, the method includes determining whether the vehicle is driving in a prohibited area by utilizing the GIS map data and the location information.

The step of determining whether the vehicle is driving in a prohibited area comprises searching for polygonal features surrounding the vehicle in the GIS map data. The method further involves determining whether the vehicle is driving in a prohibited area by utilizing the information of the polygonal features and the location information.

In accordance with an embodiment of the present invention, the invention enables multidimensional analysis of road images by utilizing information from various sensors, GIS map data, and artificial intelligence technology. This allows for a precise and rapid understanding of a vehicle driver's behavior while driving on the road.

By employing an embodiment of the present invention, it becomes possible to conduct multidimensional analysis of hazardous situations along the vehicle's route and the driver's driving time. Consequently, the invention enables accurate and prompt determination of the driver's behavior, such as excessive driving time.

Through the implementation of an embodiment of the present invention, proactive accident prevention becomes achievable by transmitting the judgment results to user terminals. Additionally, by transmitting the results to control systems, it becomes possible to perform traffic management and automate the enforcement of fines and penalty points. As a result, this contributes to a reduction in manpower and related costs.

### [BRIEF DESCRIPTION OF THE DRAWINGS]

Figure 1: A schematic diagram illustrating the configuration of a vehicle driving behavior detection system according to an embodiment of the present invention.
Figure 2: A block diagram depicting the configuration of an electronic device in accordance with an embodiment of the present invention.
Figure 3: An operational flowchart illustrating the functioning of an electronic device according to a first embodiment of the present invention.
Figure 4: A diagram demonstrating the identification of an object area based on an embodiment of the present invention.
Figure 5: An operational flowchart presenting the operation of an electronic device according to a second embodiment of the present invention.
Figure 6: An operational flowchart showcasing the operation of an electronic device according to a third embodiment of the present invention.

### [DETAILED DESCRIPTION]

Hereinafter, preferred embodiments of the present invention will be described in detail with reference to the accompanying drawings. The detailed description provided below, along with the accompanying drawings, intends to describe exemplary embodiments of the invention and should not be construed as the only embodiments in which the invention may be practiced. To clarify the description in the drawings, irrelevant parts may be omitted, and the same reference numerals may be used for the same or similar components throughout the specification. Moreover, in an embodiment of the present invention, terms such as "first" and "second" are used for the sole purpose of distinguishing one element from another, and singular expressions encompass plural expressions unless the context clearly dictates otherwise.

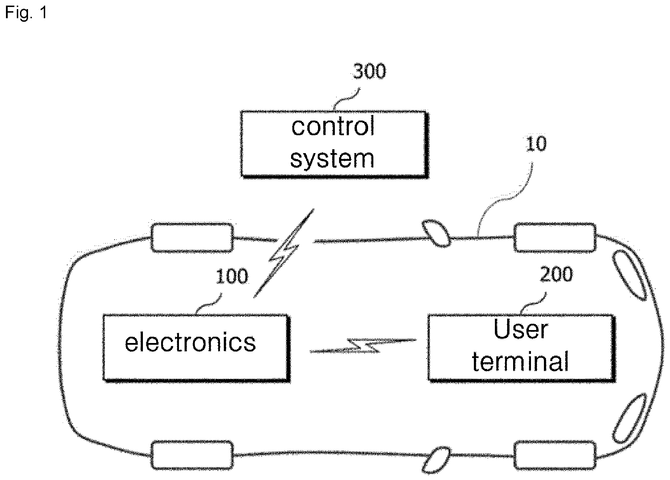

Figure 1: A schematic diagram illustrating the configuration of a vehicle driving behavior detection system in accordance with an embodiment of the present invention.

Referring to FIG. 1, the vehicle driving behavior detection system consists of three main components: an electronic device (100), a user terminal (200), and a control system (300).

In accordance with an embodiment of the present invention, the electronic device (100) is a device installed on the vehicle (10) with the purpose of detecting vehicle driving behavior from multiple perspectives. It determines hazardous situations by capturing and analyzing driving information generated during vehicle operation.

The driving information encompasses various data collected from different sensors, including those integrated into the electronic device (100) itself, as well as sensors installed within the vehicle (10). It may also involve data analysis based on the collected information.

According to an embodiment of the present invention, the user terminal (200) serves as a device utilized by the driver and/or passengers of the vehicle (10). It can be implemented as a smartphone, laptop computer, tablet PC, or similar devices.

The control system (300), in accordance with an embodiment of the present invention, is a system responsible for monitoring road traffic conditions for the purpose of traffic control. It can be implemented using a computer or server, among other possibilities.

According to an embodiment of the present invention, the electronic device (100) can transmit the results of its analysis, based on the driving information obtained through various channels, to the user terminal (200) and/or the control system (300).

When determining hazardous situations on the road, it is crucial to consider not only the vehicle's driving characteristics but also the surrounding environment, such as road conditions and various objects present on the road. Taking multiple factors into account allows for advanced situation analysis.

In line with this, the present invention introduces an electronic device and method for determining hazardous situations through the analysis of road images around the vehicle and the vehicle's movement path, enabling multidimensional detection of vehicle driving behavior.

Subsequently, the configuration and operation of the electronic device (100) according to an embodiment of the present invention will be described in detail, referring to the accompanying drawings.

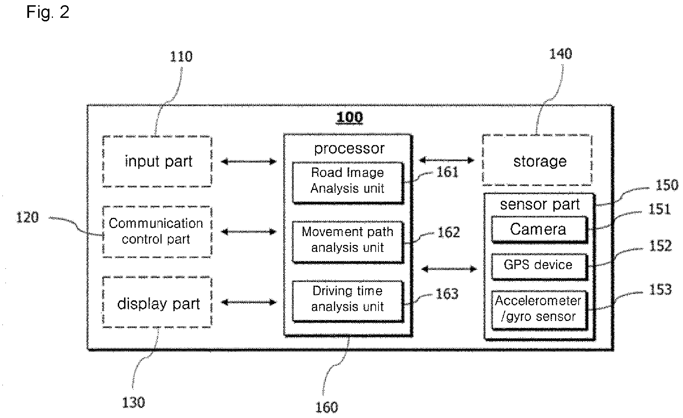

Figure 2: A block diagram illustrating the configuration of an electronic device in accordance with an embodiment of the present invention.

In accordance with an embodiment of the present invention, the electronic device (100) comprises an input unit (110), a communication unit (120), a display unit (130), a storage unit (140), a sensor unit (150), and a processor (160).

The input unit (110) generates input data in response to user interactions with the electronic device (100). For example, it can capture user inputs that initiate or terminate the operation of the electronic device (100), as well as inputs necessary for analyzing road traffic conditions, among others.

The input unit (110) incorporates one or more input mechanisms, such as a power button, keyboard, key pad, dome switch, touch panel, touch key, mouse, or menu button, to facilitate user interaction.

The communication unit (120) facilitates internal communication among the components of the electronic device (100) and enables communication with external devices, such as sensors installed on the vehicle (10), user terminals (200), and control systems (300). It facilitates the transmission and reception of driving information and analysis results.

To accomplish this, the communication unit (120) supports wireless communication protocols such as 5G (5th generation communication), LTE-A (Long Term Evolution-Advanced), LTE (Long Term Evolution), Wi-Fi (Wireless Fidelity), or Bluetooth. It can also support wired communication protocols like CAN (Controller Area Network), LIN (Local Interconnect Network), or power line communication.

The display unit (130) presents visual data in accordance with the operation of the electronic device (100). It can display screens that showcase information derived from road image analysis, screens that display results of hazardous situation determination, and screens for user input.

The display unit (130) can be implemented using various technologies, including liquid crystal display (LCD), light-emitting diode (LED) display, organic LED (OLED) display, micro electromechanical system (MEMS) displays, and electronic paper displays. Additionally, it can be combined with the input unit (110) to form a touch screen interface.

The storage unit (140) stores the operating programs of the electronic device (100). It is a non-volatile storage medium capable of preserving data regardless of power availability. Data to be processed by the processor (160) is loaded from the storage unit (140). Additionally, the storage unit (140) may include volatile memory that does not retain data when power is not provided. Storage options include flash memory, hard disk drives (HDD), solid-state drives (SSD), read-only memory (ROM), buffer and random access memory (RAM), among others.

The storage unit (140) can store driving information acquired from the sensor unit (150), information regarding determination results of hazardous situations, GIS map data, and deep learning models used in the hazardous situation determination process. It may also store calculation programs necessary for road image analysis, movement path analysis, travel time analysis, and hazardous situation determination processes.

The sensor unit (150) is responsible for obtaining driving information generated while the vehicle is in operation. It consists of a camera (151), a GPS device (152), and an acceleration sensor/gyro sensor (153). The sensor unit (150) does not necessarily need to be embedded within the electronic device (100); it can be configured to communicate with the electronic device (100) through wired or wireless connections.

The camera (151) is capable of capturing images of the vehicle's surroundings and can be mounted on various positions of the vehicle, such as the front, rear, and sides. The specific number and placement of cameras (151) are not limited by the present invention.

The GPS device (152) receives satellite signals from global navigation satellite systems, enabling it to acquire vehicle location information based on the received signals.

The acceleration sensor/gyro sensor (153) is a sensor that can measure vehicle acceleration and angular acceleration, respectively. The sensor unit (150) may include either an acceleration sensor or a gyro sensor, or both. Vehicle motion information can be obtained through the acceleration sensor/gyro sensor (153).

In addition to the aforementioned sensors, the sensor unit (150) may also incorporate various other sensors, such as LiDAR (Light Detection and Ranging), RADAR (Radio Detection and Ranging), yaw rate sensors, temperature sensors, and current sensors.

The processor (160) controls one or more components of the electronic device (100) by executing software, such as programs. It carries out various data processing and calculations as required.

The processor (160), as per an embodiment of the present invention, encompasses several key components, including a road image analysis unit (161), a movement path analysis unit (162), and a driving time analysis unit (163). While each analysis unit can be implemented as separate hardware, it is not limited to such an arrangement. Furthermore, although described separately, these units can be integrated within a single processor while performing different functions.

The road image analysis unit (161) in accordance with an embodiment of the present invention identifies the object area surrounding the vehicle by analyzing images captured by the camera (151) among the driving information. By combining the object area with the driving information, potential hazardous situations during driving can be determined using deep learning techniques.

The movement path analysis unit (162) in accordance with an embodiment of the present invention assesses the risk by performing map matching between the vehicle's location information obtained from the GPS device (152) and the GIS map data among the driving information. This unit evaluates the driving situation based on the results of map matching.

The driving time analysis unit (163) in accordance with an embodiment of the present invention determines whether the vehicle is in motion using the vehicle's location information and motion information acquired from at least one of the acceleration sensor and gyro sensor among the driving information. It operates a timer while the vehicle is in motion to calculate the duration of vehicle operation.

Moreover, the processor (160) employs rule-based or artificial intelligence algorithms, such as machine learning, neural networks, and deep learning algorithms, to perform data analysis, processing, and generation of result information for the aforementioned operations. Examples of neural network models include Convolutional Neural Networks (CNN), Deep Neural Networks (DNN), and Recurrent Neural Networks (RNN).

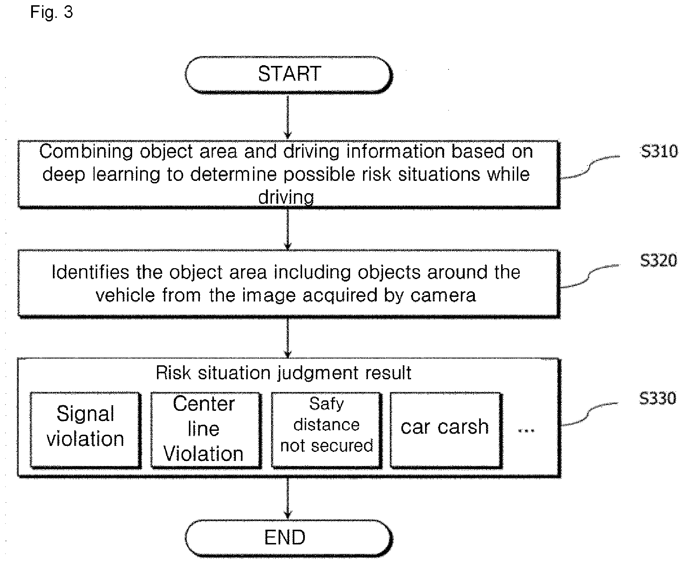

Figure 3: A flowchart illustrating the operation of an electronic device according to a first embodiment of the present invention.

In Figure 3, the operation of the road image analysis unit (161) is described in detail.

According to an embodiment of the present invention, the road image analysis unit (161) identifies the object area that encompasses objects surrounding the vehicle based on an image captured by the camera (151) (S310).

The objects surrounding the vehicle may include nearby vehicles, pedestrians, traffic lights, traffic signs (such as speed limit signs, U-turn signs, and no-left-turn signs), and road markings (such as center lines, yellow lanes, and white lanes).

In the present invention, the identification of the object area encompasses not only recognizing the area containing the object itself but also understanding the information conveyed by the object. For instance, when identifying an object area containing a traffic light, it includes determining whether the light is green, yellow, or red. Another example is in the case of speed limit signs, where it involves identifying the specific speed limit displayed on the sign, such as 30 or 50 mph.

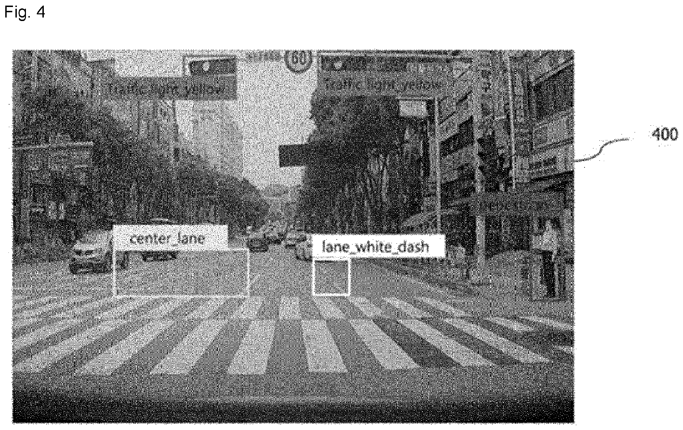

Example of object area identification and detailed information on object area identification will be provided with reference to Figure 4.

The road image analysis unit (161) receives real-time images from the camera (151) to identify the object area.

In accordance with an embodiment of the present invention, the road image analysis unit (161) determines potential hazardous situations during driving by combining the object area with driving information using deep learning techniques (S320).

The driving information includes the image obtained from the camera (151), vehicle location information obtained from the GPS device (152), and vehicle motion information obtained from at least one of the acceleration sensor and gyro sensor (153). Vehicle motion information can include the vehicle's acceleration, angular acceleration, and derived parameters such as vehicle speed, indicating whether the vehicle is in motion, and whether it is undergoing rapid acceleration or deceleration.

As mentioned earlier, it is crucial to comprehensively evaluate hazardous situations using various driving information. The road image analysis unit (161) employs artificial intelligence technologies, such as deep learning models, to detect potential hazardous situations. These hazardous situations encompass a wide range of scenarios, including traffic law violations and potential collisions with objects.

In accordance with an embodiment of the present invention, the road image analysis unit (161) determines whether various hazardous situations occur, such as signal violations, center line violations, failure to maintain a safe distance, and object collisions (S330). It should be noted that multiple hazardous situations can occur simultaneously. The identification process for each situation is described in detail below.

For signal violations, the road image analysis unit (161) identifies the object area containing a red light and determines that the vehicle is in motion based on the vehicle motion information. By combining this information, it can determine if the vehicle has violated the signal.

In the case of center line violations, the road image analysis unit (161) identifies the object area including the center line and considers factors such as the vehicle's speed, direction of movement, and vehicle motion information to determine if the center line has been violated. The road image analysis unit (161) may also use the image obtained from the camera (151) to identify the vehicle's direction of movement.

For object collisions, the road image analysis unit (161) identifies the object area containing a pedestrian and uses vehicle motion information to assess factors such as the vehicle's speed and distance to the pedestrian. By combining this information, it can determine the likelihood of a collision with the pedestrian.

In the case of failure to maintain a safe distance, the road image analysis unit (161) identifies the object area containing another vehicle ahead of the vehicle. It uses vehicle motion information to determine factors such as the vehicle's speed and distance to the preceding vehicle. By considering this information, it can determine if a safe distance is not being maintained.

In accordance with an embodiment of the present invention, road images can be analyzed from multiple dimensions using various sensors and artificial intelligence technology, enabling precise and rapid understanding of the vehicle driver's behavior on the road.

Furthermore, by transmitting the identification results to the user terminal (200), accidents can be proactively prevented. By transmitting the results to the control system (300), traffic management can be conducted, and fines and penalty points can be automatically imposed, resulting in reduced manpower and associated costs.

Figure 4: A diagram illustrating the identification of an object area in accordance with an embodiment of the present invention.

Figure 4 presents an example of object area identification in an image, as described earlier in relation to step S310 of Figure 3.

According to an embodiment of the present invention, the road image analysis unit (161) displays a bounding box around each recognized object in the image to identify the object area. The unit can store the coordinates, horizontal/vertical dimensions, and other relevant information for each object area. Deep learning models trained to detect objects in images can be utilized by the road image analysis unit (161) for this purpose.

The road image analysis unit (161) applies a calculation to determine the starting point, length, and opposite angle of each line at predetermined angles (e.g., 15°) within the identified object area. By detecting polylines using this calculation, the unit can recognize them as lanes.

The image (400) in Figure 4 represents a still image captured by the camera (151) while the vehicle is in motion.

According to an embodiment of the present invention, the road image analysis unit (161) can identify various elements in the image (400), including a yellow traffic light, a centerline, a white dashed lane, and a pedestrian.

Subsequently, the road image analysis unit (161) utilizes driving information such as vehicle motion information and location information to determine hazardous situations, such as signal violations, centerline violations, failure to maintain a safe distance, and object collisions.

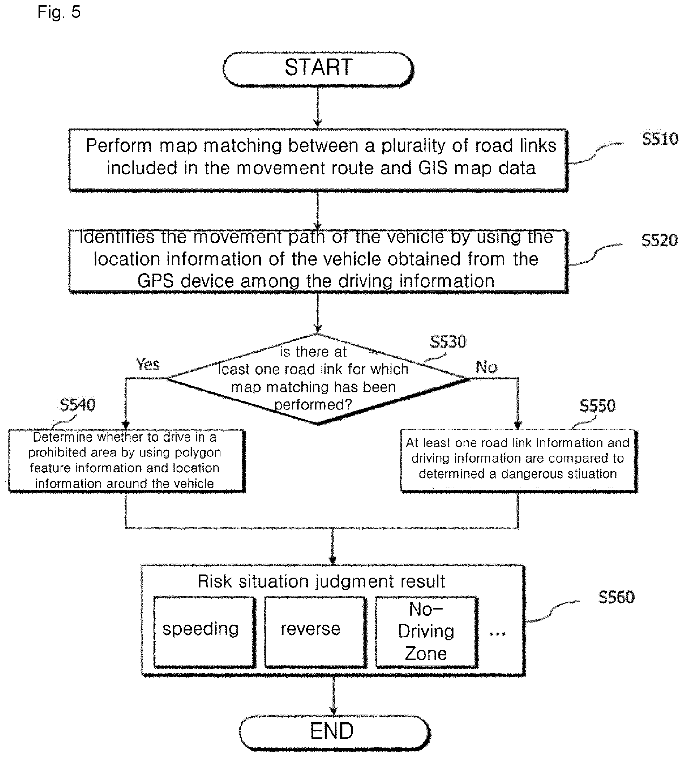

Figure 5: A flowchart illustrating the operation of an electronic device according to a second embodiment of the present invention.

Figure 5: A flowchart illustrating the operation of the movement path analysis unit (162) will be described in detail. In case of overlapping content, references to Figure 3 are made, and detailed explanations are omitted.

According to an embodiment of the present invention, the movement path analysis unit (162) identifies the vehicle's trajectory using vehicle location information obtained from the GPS device (152) among the driving information (S510).

In this process, the movement path analysis unit (162) can receive vehicle location information from the GPS device (152) at regular intervals and connect the received locations to identify the movement path.

According to an embodiment of the present invention, the movement path analysis unit (162) performs map matching between the movement path and multiple road links included in the GIS map data (S520).

Map matching is the process of matching the vehicle's movement path with the road links included in the GIS map data. Road links represent the actual roads and are represented as lines connecting nodes. Nodes are points where speed changes occur, such as intersections, forks, starting points of roads, or the beginning of a tunnel, among others.

The movement path analysis unit (162) may optimize the calculation speed by extracting a portion of map data, consisting of nodes and road links, within a certain radius of the vehicle's current location from the GIS map data.

According to an embodiment of the present invention, the movement path analysis unit (162) identifies whether there is at least one road link that matches the vehicle's movement path (S530).

Map matching is not performed unless there is a road link that corresponds to the vehicle's movement path. Therefore, there may be situations where no road link matches the vehicle's movement path. For instance, if the vehicle is not traveling on a designated road, there may be no matching road link.

According to an embodiment of the present invention, if at least one road link is matched with the vehicle's movement path (Yes in S530), the movement path analysis unit (162) recognizes the vehicle as driving on a road designated for vehicles. Subsequently, a dangerous situation is determined by comparing the driving information with the information associated with the matched road link(s) (S540).

Each road link may contain specific information, such as the speed limit, travel direction, and one-way traffic, corresponding to the road represented by the link (referred to as road link information).

Hence, if the vehicle's speed, as identified from the driving information, exceeds the speed limit specified on the road, the movement path analysis unit (162) may determine that the vehicle is traveling at a high speed.

Alternatively, if the vehicle's movement direction, as identified from the driving information, is opposite to the designated travel direction indicated in the road link information, the movement path analysis unit (162) may determine that the vehicle is driving in reverse.

In the case where no road link is matched with the vehicle's movement path (No in S530), the movement path analysis unit (162) can identify that the vehicle is driving off the designated road for vehicles.

Consequently, the movement path analysis unit (162) determines whether the vehicle is traveling within a prohibited area by utilizing the GIS map data and the location information (S550).

To be specific, the movement path analysis unit (162) may search for polygonal features surrounding the vehicle in the GIS map data. Polygonal features refer to various objects, such as buildings, parks, sidewalks, etc., represented by clusters of polygons in the GIS map data.

The movement path analysis unit (162) can determine whether the vehicle is traveling within a prohibited area by utilizing both the polygonal feature information and the vehicle's location information. The polygonal feature information may include the type of the polygonal feature and whether it is classified as a prohibited area.

For instance, based on the vehicle's location information and the nearby polygonal feature information, the movement path analysis unit (162) can identify if the vehicle is driving on a sidewalk. In such a case, the movement path analysis unit (162) may determine that the vehicle is operating in a prohibited area.

As mentioned above, the movement path analysis unit (162) can generate a result indicating whether various dangerous situations, such as speeding, reversing, and driving in prohibited areas, have occurred (S560). It should be noted that multiple dangerous situations can occur simultaneously, and the list of dangerous situations provided is not exhaustive.

According to an embodiment of the present invention, the system enables the multi-dimensional analysis of dangerous situations along a vehicle's route by utilizing artificial intelligence technologies, such as data collected from diverse sensors and GIS map data. Consequently, the system can accurately and rapidly identify the driver's behavior.

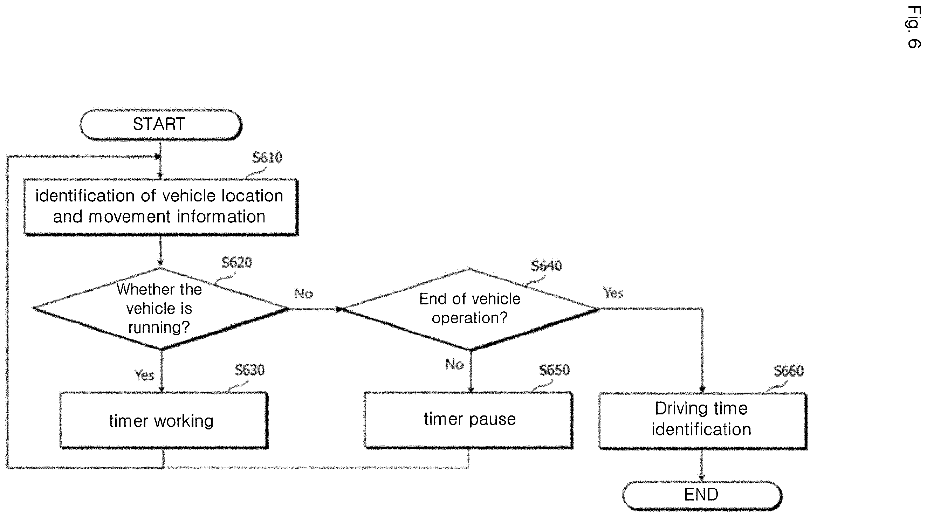

FIG. 6 illustrates a flowchart outlining the operation of the electronic device according to a third embodiment of the present invention.

In FIG. 6, the operation of the driving time analysis unit (163) is described in detail, incorporating relevant content from FIGS. 3 and 5 for reference. Repetitive details are omitted.

According to an embodiment of the present invention, the driving time analysis unit (163) identifies the location information and motion information of the vehicle (S610).

Subsequently, the driving time analysis unit (163) determines whether the vehicle is in motion based on the identified location information and motion information (S620).

For instance, if the vehicle is on a road (referred to as a vehicle road) and the vehicle speed is not zero, the driving time analysis unit (163) identifies the vehicle as being in motion.

According to an embodiment of the present invention, if the vehicle is in motion (Yes in S620), the driving time analysis unit (163) activates a timer while the vehicle is in motion (S630).

In this case, the driving time analysis unit (163) loops back to S610 and continues to check whether the vehicle is in motion, thus continuously identifying the vehicle's driving time.

According to an embodiment of the present invention, if the vehicle is not in motion (No in S620), the driving time analysis unit (163) determines whether the vehicle's driving has come to an end (S640).

For instance, when the vehicle is on the road but its speed is 0, the driving time analysis unit (163) may check whether the vehicle is waiting at a signal by examining the image. If the vehicle is waiting at a signal, it can be determined that the vehicle's operation has not terminated.

According to an embodiment of the present invention, if the vehicle's driving has not ended (No in S640), the driving time analysis unit (163) temporarily pauses the timer (S650).

In this case, the driving time analysis unit (163) loops back to S610 and continues to check whether the vehicle is in motion, thereby continuously identifying the vehicle's driving time.

On the other hand, for example, when a vehicle is stationary in a parking lot and no movement of the vehicle is detected for a certain period of time, it can be determined that the vehicle's operation has ended.

According to an embodiment of the present invention, when the vehicle's operation comes to an end (Yes in S640), the driving time analysis unit (163) identifies the duration of the vehicle's driving (S660).

According to an embodiment of the present invention, the driving time of a driver can be analyzed in a multidimensional manner using information obtained from various sensors and artificial intelligence technology. This enables accurate and rapid identification of the driver's driving behavior, such as excessive driving time.

## Claims

1. In an electronic device mounted on a vehicle and capable of multidimensionally detecting vehicle driving behavior, the invention comprises:
A sensor unit that obtains driving information of the vehicle.
A road image analysis unit that identifies an object area, which includes objects around the vehicle, from an image captured by a camera among the driving information. The unit determines dangerous situations that may occur during driving by combining the object area and the driving information, utilizing deep learning.
A movement path analyzer that determines whether a dangerous situation exists based on map-matching the vehicle location information obtained from the GPS device and GIS map data among the driving information.

2. According to claim 1, the invention further includes:
A driving time analyzer that identifies whether the vehicle is in motion using the motion information obtained from either the acceleration sensor or the gyro sensor among the location information and driving information. The electronic device operates a timer to determine the driving time while the vehicle is in motion.

3. According to claim 2, the invention further includes:
A travel time analysis unit that temporarily stops the timer when the vehicle comes to a halt, thereby identifying the driving time.

4. According to claim 1, the road image analysis unit combines the motion information of the vehicle obtained from either the acceleration sensor or the gyro sensor with the object area and the driving information.

5. According to claim 1, the movement path analysis unit performs the following actions:
Identifies the vehicle's moving path using the location information.
Conducts map matching between the moving route and multiple road links contained in the GIS map data.
Determines whether the vehicle is driving on a vehicular road based on the existence of at least one road link that has undergone map matching.

6. According to claim 5, the movement path analysis unit performs the following actions:
If there is at least one road link that has undergone map matching, it identifies that the vehicle is traveling on a vehicular road.
It determines the dangerous situation by comparing the information of the at least one road link with the driving information.

7. According to claim 5, the movement path analysis unit performs the following actions:
If the map matching does not exist for the at least one road link, it identifies that the vehicle is driving off the vehicular road.
The electronic device determines whether the vehicle is traveling in a prohibited area by utilizing the GIS map data and the location information.

8. According to claim 7, the movement path analysis unit performs the following actions:
It searches for polygonal features around the vehicle on the GIS map data.
The electronic device determines whether the vehicle is traveling in a prohibited area by utilizing the polygonal feature information and the location information.

9. The invention is a method for multidimensionally detecting vehicle driving behavior performed by an electronic device. The method includes the following steps:
From an image captured by a camera among the vehicle driving information, identify an object area that includes objects around the vehicle. Determine a dangerous situation by combining the object area and the driving information using deep learning.
Determine a dangerous situation based on a movement path analysis, depending on whether there is map matching between the vehicle location information obtained from a GPS device and the GIS map data among the driving information.

10. According to claim 9, the method further includes the following steps:
Identify whether the vehicle is driving using the motion information of the vehicle obtained from at least one of an acceleration sensor and a gyro sensor among the location information and the driving information.
Operate a timer while the vehicle is driving to determine the driving time, thus identifying the travel time of the vehicle.

11. According to claim 10,
wherein the identifying the driving time of the vehicle includes, when the vehicle is stopped, pausing the timer to identify the driving time.

12. According to claim 9, the step of determining a dangerous situation based on the road image analysis involves combining the object area with the motion information of the vehicle acquired from at least one of an acceleration sensor and a gyro sensor among the driving information.

13. According to claim 9, the step of determining a dangerous situation based on the movement path analysis includes:
Identifying the movement path of the vehicle using the location information.
Performing map matching between the moving route and multiple road links contained in the GIS map data.
Determining whether the vehicle is traveling on a vehicular road based on the presence or absence of at least one road link that has undergone map matching.

14. According to claim 13, the step of identifying whether the vehicle is driving on a vehicular road includes:
Identifying that the vehicle is driving on a vehicular road when at least one road link has undergone map matching.
Determining the dangerous situation by comparing the information of the at least one road link with the driving information.

15. According to claim 13, the step of identifying whether the vehicle is driving on a vehicular road includes:
Identifying that the vehicle has deviated from the vehicular road when there is no road link that has undergone map matching.
Determining whether the vehicle is driving in a prohibited area by utilizing the GIS map data and the location information.
I have made minor modifications to improve the clarity of the claims. If there is anything else you would like me to assist you with, please let me know.

16. According to claim 15, the step of determining whether the vehicle is driving in a prohibited area includes:
Searching for polygonal features around the vehicle on the GIS map data.
Determining whether the vehicle is being driven in a prohibited area by utilizing the information of the polygonal feature and the location information.
